# EUROPÄISCHE PATENTSCHRIFT

(11) **EP 0 979 211 B1**
(45) Veröffentlichungstag und Bekanntmachung des Hinweises auf die Patenterteilung: **19.02.2003**
(21) Anmeldenummer: 98932010.6
(22) Anmeldetag: 27.04.1998
(51) Int. Cl.: C02F 1/44, H01L 21/304

(54) **VERFAHREN ZUR BEHANDLUNG VON ABWASSER AUS EINEM CHEMISCH-MECHANISCHEN POLIERPROZESS IN DER CHIPFERTIGUNG**
METHOD FOR TREATING WASTEWATERS FROM A CHEMICAL-MECHANICAL POLISHING PROCESS IN CHIP MANUFACTURING
PROCEDE POUR LE TRAITEMENT DES EAUX USEES RESULTANT D'UN PROCEDE DE POLISSAGE CHIMICO-MECANIQUE DANS LA FABRICATION DES PUCES

(30) Priorität: 28.04.1997 DE 19717865
(43) Veröffentlichungstag der Anmeldung: 16.02.2000
(73) Patentinhaber: Infineon Technologies AG, 81669 München (DE)
(72) Erfinder: HAMMER, Jürgen, D-01454 Radeberg (DE); RICHTER, Andre, D-01844 Neustadt (DE); KRAUS, Werner, D-93158 Teublitz (DE); PETERMANN, Heinz-Dieter, 70599 Stuttgart (DE)
(74) Vertreter: Kindermann, Peter, Dipl.-Ing.
(86) Internationale Anmeldenummer: DE9801164
(87) Internationale Veröffentlichungsnummer: WO98049102

(56) Entgegenhaltungen:
- EP-A- 0 585 036
- WO-A-95/35261
- JP-A- 8 115 892
- US-A- 4 915 844
- US-A- 5 182 023
- PATENT ABSTRACTS OF JAPAN vol. 011, no. 290 (C-447), 18. September 1987 & JP 62 083086 A (NEC KYUSHU LTD), 16. April 1987

## Beschreibung

Die Erfindung bezieht sich auf ein Verfahren sowie eine Vorrichtung zur Behandlung von Abwasser aus einem chemisch-mechanischen Polierprozeß in der Chipfertigung.

Aus der Druckschrift US 4,915,844 ist eine Vorrichtung und ein Verfahren zur Behandlung von Abwasser aus einem Polierprozeß in der Chipfertigung bekannt, wobei die im Abwasser abrasiv wirkenden Partikel mit einer Ultrafiltrationsanlage herausgefiltert werden.

Aus der Druckschrift JP 62 083 086 ist ein zweistufiges Verfahren zur Behandlung von Abwasser aus einem Polierprozeß in der Chipfertigung bekannt, bei dem das Abwasser einerseits durch eine normale Ultrafiltrationsmembran und andererseits durch eine hitzefeste Ultrafiltrationsmembran von abrasiv wirkenden Partikeln gereinigt wird.

Ferner ist in der Druckschrift JP-A-08 115 892 eine Vorrichtung und ein Verfahren offenbart, bei der die abrasiven Partikel durch Filterstufen aus der Polierflüssigkeit abgetrennt werden. Die gefilterte Polierflüssigkeit wird hierbei verworfen, während die abrasiven Partikel wiederverwendet werden können.

In der Halbleiterchipfertigung werden zunehmend Chemisch-mechanische Polierprozesse (CMP) eingesetzt, um den Halbleiterwafer einzuebnen bzw. ihn eben zu halten. Der Wafer wird dabei mit einem Polierwerkzeug unter Zugabe einer Polierflüssigkeit, der sogenannten Slurry behandelt. Typischerweise dient deionisiertes Wasser sehr hoher Reinheit als Basis für diese Polierflüssigkeit, dem chemische Additive und/oder abrasiv wirkende Partikel zugesetzt werden.

Nach dem chemisch-mechanischen Polierprozeß enthält die abfließende Polierflüssigkeit neben diesen Bestandteilen noch zusätzlich Abrieb aus dem Polierprozeß sowie weitere Verunreinigungen. Dies hat zur Folge, daß die Polierflüssigkeit mit einer Reihe von abrasiv wirkenden Partikeln und einer Reihe von chemisch aktiven Substanzen belastet ist. Bei einer Abwassermenge von etwa 30m³/h können beispielsweise folgende Bestandteile in der Polierflüssigkeit enthalten sein.

| | |
|---|---|
| TMAH (3%-ig) | ≈ 80 l/h |
| SiO₂ | ≈ 17,2 kg/h |
| Al₂(SO₄)₃ (8%-ig) | ≈ 9 l/h |
| NH₄OH (2%-ig) | ≈ 14 l/h |
| Fe(NO₃)₃ (49%-ig) | ≈ 7 l/h |
| Al₂O₃ | ≈ 0,6 kg/h |
| As | ≈ 35 mg/h |
| HNO₃ | ≈ 250 g/h |
| TiNₓ | ≈ 100 g/h |
| H₃PO₄ | ≈ 100 g/h |
| KOH | ≈ 250 g/h |
| HF | ≈ 0,1 g/h |
| H₂O₂ | ≈ 0,1 g/h |
| W | ≈ 100 g/h |
| Al | ≈ 100 g/h |
| (NH₄)₂S₂O₈ | ≈ 150 g/h |
| HCL | ≈ 100 g/h |
| NH₄F | ≈ 100 g/h |
| Monoethylenglykol | ≈ 100 g/h |
| Ammoniumperfluoralkylsulfonat | ≈ 100 g/h |
| (NH₄)Ce(NO₃)₆ | ≈ 100 g/h |

Bisher wird dieses Abwasser aus einem chemisch-mechanischen Polierprozeß in der Chipfertigung chemisch neutralisiert, grobe Partikelverunreinigungen werden durch Sedimentation entfernt, und das derart behandelte Abwasser wird in das öffentliche Kanalnetz eingeleitet und ist damit für betriebliche Zwecke verloren.

Dieses bekannte Vorgehen hat den Nachteil, daß der Wasserverbrauch beträchtlich ist; er beträgt bei größeren Chipfertigungsanlagen etliche m³/h. Diese in das öffentliche Kanalnetz abgeleitete Wassermenge muß durch neues, deionisiertes Wasser sehr hoher Reinheit ersetzt werden, was zu entsprechenden Kosten für die Bereitstellung des deionisierten Wassers führt. Darüber hinaus werden durch das eingeleitete Abwasser aus einem chemisch-mechanischen Polierprozeß in der Chipfertigung die Kläranlagen des öffentlichen Kanalnetzes zusätzlich belastet, was ökologisch nicht wünschenswert ist.

Es besteht daher die Aufgabe, ein Verfahren zur Behandlung von Abwasser aus einem chemisch-mechanischen Polierprozeß in der Chipfertigung schaffen, wodurch die insgesamt anfallende abzuleitende Abwassermenge verringert werden kann. Insbesondere ist es in Weiterbildung der Erfindung wünschenswert, dass das behandelte Abwasser anschließend wieder zu deionisiertem Wasser rezykliert werden kann.

Die Aufgabe wird durch ein Verfahren mit den Merkmalen des Anspruchs 1 gelöst.

Insbesondere durch den Einsatz einer Ultrafiltrationsanlage, die in so kurzen Zeitabständen gespült wird, dass die zurückgehaltenen Partikel nicht aufgelöst werden, ist es möglich, das Abwasser aus einem chemisch-mechanischen Polierprozeß (im folgenden kurz CMP-Abwasser genannt) derart aufzubereiten, dass das behandelte Abwasser innerhalb des Betriebes weiterverwendet werden kann oder ohne wesentliche ökologische Belastungen ins öffentliche Kanalnetz eingeleitet werden kann. Ultrafiltration im Sinne dieser Patentanmeldung bedeutet, daß Partikel mit einem Durchmesser von mehr als 0,4 µm im wesentlichen ausgefiltert werden. Es wird darüber hinaus gehend bevorzugt, daß Partikel mit einem Durchmesser von mehr als 0,1 µm durch die Ultrafiltration im wesentlichen ausgefiltert werden. Bei relativ geringen bis mittleren Partikelverunreinigungen ist die Ultrafiltration ausreichend, um einen Reinheitsgrad des behandelten Abwassers zu erreichen, der es möglich macht, das behandelte Abwasser anschließend wieder zu deionisiertem Wasser zu rezyklieren.

Dabei ist es bevorzugt, wenn das CMP-Abwasser so schnell einer Ultrafiltration unterworfen wird, daß die im CMP-Abwasser enthaltenen, abrasiv wirkenden Partikel, wie beispielsweise die SiO₂-Partikel, durch die im CMP-Abwasser enthaltenen chemisch aktiven Substanzen, wie beispielsweise KOH, im wesentlichen nicht aufgelöst werden. Ist dies gewahrleistet, können die in den Partikeln enthaltenen Substanzen nahezu vollständig durch die Ultrafiltration aus dem CMP-Abwasser entfernt werden.

Bei organischen oder anorganischen Verunreinigungen kann es notwendig sein, zusätzlich zur Ultrafiltrationsstufe noch eine Umkehrosmosestufe und/oder eine Nanofiltrationsstufe vorzusehen. Eine Umkehrosmose dient dabei im wesentlichen zum Entfernen von Kohlenstoffverbindungen der organischen Chemie aus dem zu behandelnden CMP-Abwasser. Nanofiltration im Sinne dieser Patentanmeldung bedeutet, daß Partikel mit einem Durchmesser von mehr als 0,05 µm im wesentlichen ausgefiltert werden. Es wird darüber hinaus gehend bevorzugt, daß Partikel mit einem Durchmesser von mehr als 0,01 µm durch die Nanofiltration im wesentlichen ausgefiltert werden.

Besonders wirtschaftlich ist es, nach der Ultrafiltration des zu behandelnden Abwassers ein oder mehrere Parameterwerte des ultrafiltrierten Abwassers zu messen und in Abhängigkeit von den gemessenen Parameterwerten das ultrafiltrierte Abwasser entweder direkt weiterzuleiten oder einer Umkehrosmoseanlage oder einer Nanofiltrationsanlage oder beiden zuzuführen. Auf diese Weise werden die weiteren, aufwendigeren Reinigungsstufen Umkehrosmose und Nanofiltration nur dann eingesetzt, wenn sie gemäß den gemessenen Parameterwerten tatsächlich benötigt werden. Als Parameterwerte kommen insbesondere die Leitfähigkeit des behandelten Abwassers, sein gesamter organisch gebundener Kohlenstoffgehalt, sein Partikelgehalt oder sein Gehalt an Siliziumoxiden oder Ammoniak NH3 in Frage.

Bevorzugt wird das gereinigte Abwasser anschließend wieder einer Aufbereitungsanlage für deionisiertes Wasser zugeführt, so daß ein geschlossener Wasserkreislauf entsteht.

Weitere vorteilhafte Weiterbildungen der Erfindung sind Gegenstand der Unteransprüche.

Die Erfindung wird im folgenden anhand zweier Ausführungsbeispiele der Erfindung, die in den beigefügten Zeichnungen gezeigt sind, näher erläutert. In den beigefügten Zeichnungen zeigen:
- Fig. 1a, b: ein erstes Ausführungsbeispiel einer erfindungsgemäßen Vorrichtung, wobei das Ausführungsbeispiel eine Ultrafiltrationsanlage umfaßt;
- Fig. 2a, b, c: ein zweites Ausführungsbeispiel einer erfindungsgemäßen Vorrichtung, wobei das Ausführungsbeispiel zusätzlich eine Umkehrosmoseanlage und/oder eine Nanofiltrationsanlage umfaßt.

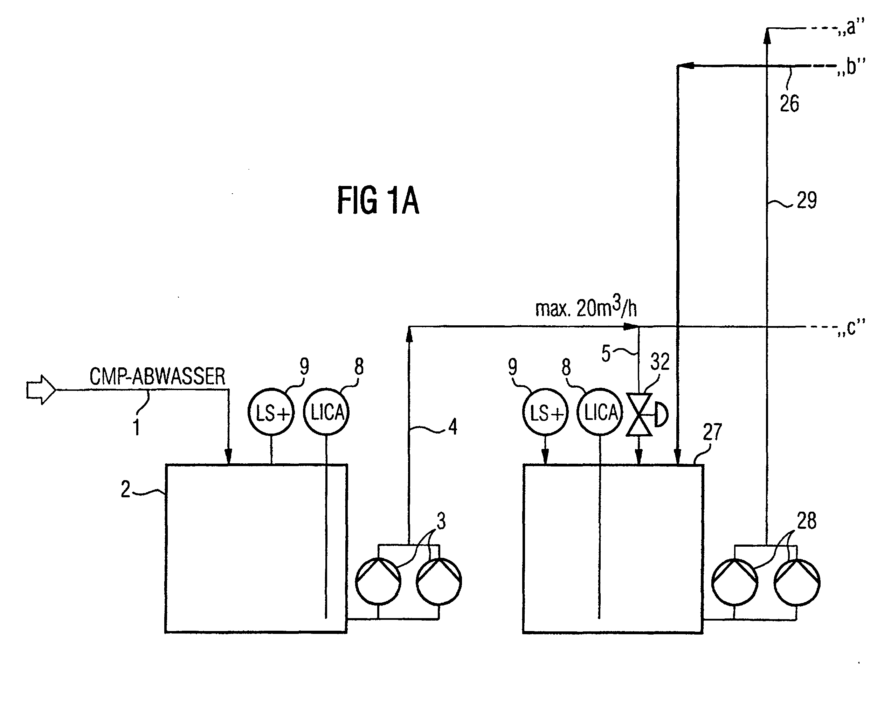

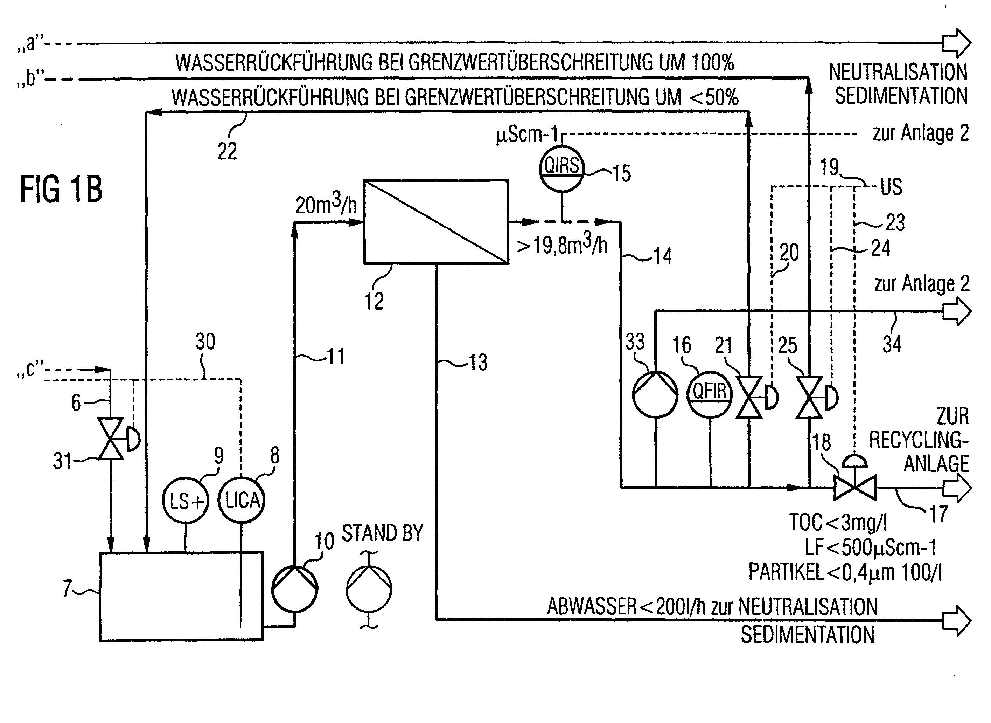

Die Figuren 1a, b zeigen in Kombination schematisch ein Blockbild einer Abwasserbehandlungsvorrichtung, die insbesondere für lediglich Partikelverunreinigungen enthaltendes CMP-Abwasser ausgelegt ist. Die Fig. 1b schließt rechts an die Fig. 1 a an, wobei die zusammengehörigen Übergänge der Rohrleitungen jeweils durch "a", "b", "c" gekennzeichnet sind.

Über eine Eingangsrohrleitung 1 wird das CMP-Abwasser einer Hebeanlage 2 zugeführt. Über Rohrleitungen 4, 6 gelangt das CMP-Abwasser anschließend in einen Vorlagebehälter 7. Sowohl die Hebeanlage 2 als auch der Vorlagebehälter 7 sind mit Füllstandsmeßeinrichtungen 8 und Grenzwertschaltern 9 ausgerüstet.

Eine Pumpe 10 fördert das CMP-Abwasser aus dem Vorlagebehälter 7 über eine Rohrleitung 11 in die Ultrafiltrationsanlage 12. In der Ultrafiltrationsanlage 12 der Fig. 1a, b werden im wesentlichen alle Partikel mit einem Durchmesser von mehr als 0,2 µm ausgefiltert.

Dabei sind die Rohrleitung 1, 4 und 6 sowie die Hebeanlage 2 und der Vorlagebehälter 7 und die Pumpe 10 so ausgelegt, daß die im CMP-Abwasser enthaltenen, abrasiv wirkenden Partikel, wie beispielsweise die SiO₂-Partikel, durch die im CMP-Abwasser enthaltenen chemisch aktiven Substanzen, wie beispielsweise KOH, im wesentlichen nicht aufgelöst werden.

Unter üblichen Prozeßbedingungen verlassen bis zu über 99% des in die Ultrafiltrationsanlage 12 eintretenden CMP-Abwasserstroms die Ultrafiltrationsanlage 12 als gefiltertes Permeat über eine Rohrleitung 14, wobei die in der Praxis erreichbaren Prozentwerte im Detail aber von Abwassermenge und Verschmutzungsart und -grad abhängen. Die Leitfähigkeit des Permeats in der Rohrleitung 14 wird von einem Steuerungssystemsensor 15 und einem Meßsensor 16 gemessen. In dem Ausführungsbeispiel der Fig. 1a, b wird gefordert, daß der Leitfähigkeitswert des gereinigten Abwassers in der Rohrleitung 14 kleiner als 500 µS/cm ist. Falls dieser Grenzwert eingehalten wird, gelangt das gereinigte Abwasser über die Rohrleitung 14, das Ventil 18 und die anschließende Ausgangsrohrleitung 17 in eine in bekannter Weise aufgebaute Wasseraufbereitungsanlage, die in den Fig. 1a, b nicht gezeigt ist, und wird dort zu deionisiertem Wasser rezykliert, das zum Beispiel wieder beim CMP-Prozeß eingesetzt werden kann.

In regelmäßigen Zeitabständen werden die herausgefilterten Partikel aus der Ultrafiltrationsanlage 12 durch Rückspülen entfernt. Dazu wird für kurze Zeit der Zustrom des CMP-Abwassers aus der Rohrleitung 11 gestoppt und bereits gefiltertes Abwasser aus der Rohrleitung 14 fließt in umgekehrter Richtung zu der Ultrafiltrationsanlage 12. Das abgefilterte Konzentrat wird dann über eine Rohrleitung 13 einer in bekannter Weise arbeitenden Neutralisations- und Sedimentationsanlage zugeführt, die in den Fig. 1a, b nicht gezeigt ist. Die Zeitabstände zwischen den einzelnen Rückspülungen sind dabei so kurz gewählt, daß es während des normalen Betriebs in der Ultrafiltrationsanlage im wesentlichen zu keiner Reaktion zwischen den in der Ultrafiltrationanlage zurückgehaltenen Partikeln und den in dem CMP-Abwasser enthaltenen, chemisch aktiven Substanzen kommt.

Wie bereits erwähnt wird in der Regel gefordert, daß der Leitfähigkeitswert des gereinigten Abwassers in der Rohrleitung 14 kleiner als 500 µS/cm ist. Falls der Leitfähigkeitsgrenzwert von 500 µS/cm um weniger als 50% überschritten wird, öffnet ein vom Steuerungssystemsensor 15 gesteuertes Umsetzerstellglied 19 über eine Steuerleitung 20 ein Ventil 21 und leitet das ultrafiltrierte Abwasser aus der Rohrleitung 14 über eine Rohrleitung 22 zurück in den Vorlagebehälter 7. Gleichzeitig wird über eine Steuerleitung 23 das Ventil 18 zwischen der Rohrleitung 14 und der Ausgangsrohrleitung 17 geschlossen.

Für den Fall, daß der genannte Leitfähigkeitsgrenzwert um mehr als 100% überschritten wird, öffnet das vom Steuerungssystemsensor 15 gesteuerte Umsetzerstellglied 19 über eine Steuerleitung 24 ein Ventil 25, so daß das Abwasser aus der Ultrafiltrationsanlage 12 in der Rohrleitung 14 über eine Rohrleitung 26 einem Speicherbehälter 27 zugeführt wird. Eine derartige hohe Grenzwertüberschreitung wird im wesentlichen dann auftreten, wenn es zu einem Bruch der Filtermembrane in der Ultrafiltrationsanlage 12 gekommen ist. Das Ventil 18 zwischen der Rohrleitung 14 und der Ausgangsrohrleitung 17 bleibt geschlossen.

Das Abwasser im Speicherbehälter 27 kann über einen Pumpensatz 28 und eine Ausgangsrohrleitung 29 der bekannten Neutralisation und Sedimentation zugeführt werden. Auch der Speicherbehälter 27 ist mit einem Füllstandsmeßeinrichtung 8 und einem Grenzwertschalter 9 ausgerüstet.

Es ist weiter vorgesehen, daß die Füllstandsmeßeinrichtung 8 des Vorlagebehälters 7 bei Erreichen eines zu hohen Füllstandes im Vorlagebehälter 7 über eine Steuerleitung 30 ein Ventil 31 in der Rohrleitung 6 schließt und gleichzeitig ein Ventil 32 in einer zum Speicherbehälter 27 führenden Rohrleitung 5, die an die Rohrleitung 4 anschließt, öffnet, so daß aus der Hebeanlage 2 über den Pumpensatz 3 und die Rohrleitung 4 zufließendes, zu reinigendes CMP-Abwasser in den Speicherbehälter 27 gelangt und von dort über den Pumpensatz 28 und die Ausgangsrohrleitung 29 abgepumpt wird.

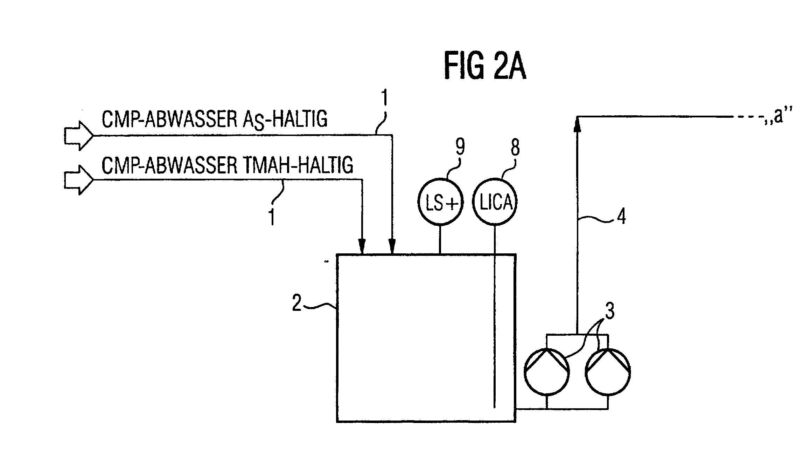

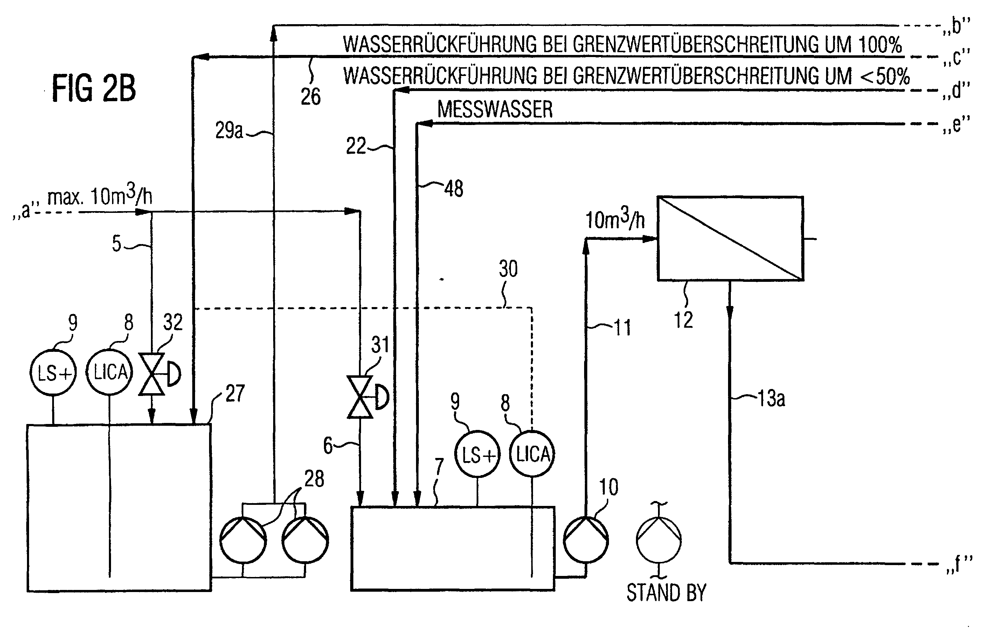

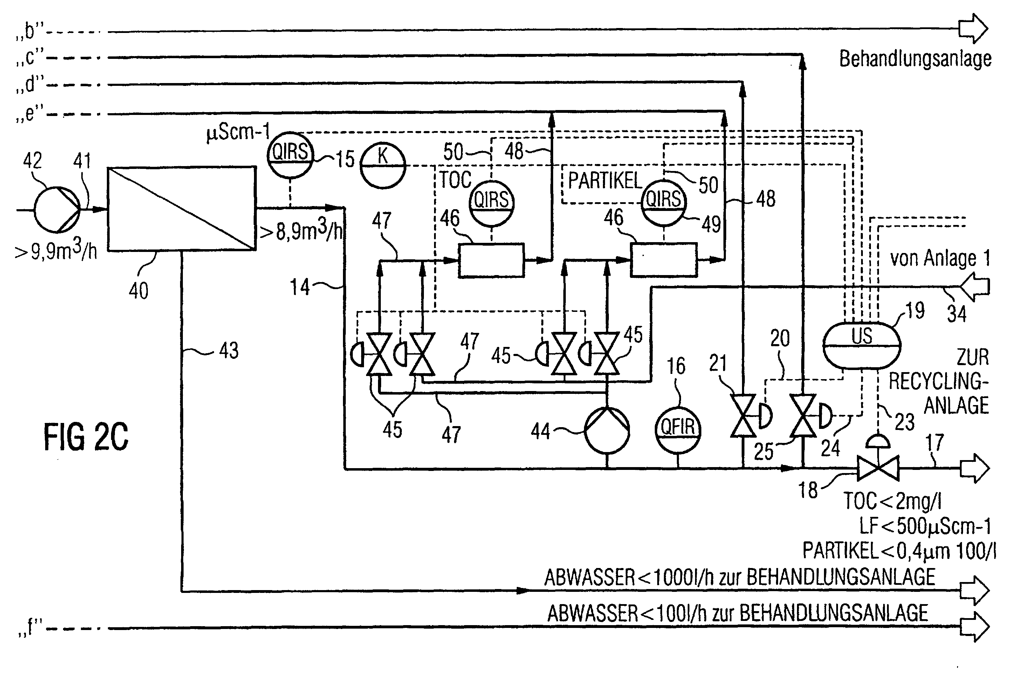

Es ist weiter vorgesehen, daß ein Teil des in der Ultrafiltrationsanlage 12 gereinigten Abwassers aus der Rohrleitung 14 über eine Pumpe 33 und eine Ausgangsrohrleitung 34 entnommen und zur Messung von anderen Parameterwerten und/oder zur weiteren Reinigung der in den Fig. 2a, b, c gezeigten CMP-Abwasserbehandlungsanlage zugeführt werden kann.

Die CMP-Abwasserbehandlungsanlage der Fig. 1a, b ist auf einen CMP-Abwasseranfall von etwa 20 m³/h ausgelegt. Die von ihr in der Praxis erreichten Reinheitsgrenzwerte des gereinigten Abwassers in der Ausgangsrohrleitung 17 sind: Leitfähigkeit (LF) < 500 µS/cm, gesamter organisch gebundener Kohlenstoffgehalt (TOC) < 3 mg/l, weniger als 100 Partikel mit einem Durchmesser von < 0,4 µm pro 1. Bei einem Zufluß von 20 m³/h CMP-Abwasser in der Eingangsrohrleitung 1 werden unter üblichen Betriebsbedingungen weniger als 200 l/h Abwasserkonzentrat über die Ausgangsrohrleitung 13 der Neutralisation und Sedimentation durchgeführt, während mehr als 19,8 m³/h - also mehr als 99% - über die Ausgangsrohrleitung 17 wieder der Rezyklierung zu deionisiertem Wasser zugeführt werden können. Aus diesen Daten wird die durch die Erfindung erreichte beträchtliche Verringerung des Wasserverbrauchs beim chemisch-mechanischen Polieren deutlich.

Das Ausführungsbeispiel der Figuren 2a, b, c ist gegenüber dem ersten Ausführungsbeispiel der Figuren 1a, b um eine Umkehrosmose- und/oder Nanofiltrationsanlage 40 erweitert. Die Figuren 2a, b, c zeigen in Kombination schematisch ein Blockbild der Abwasserbehandlungsvorrichtung. Die Fig. 2b schließt rechts an die Fig. 2a an, und die Fig. 2c schließt rechts an die Fig. 2b an, wobei die zusammengehörigen Übergänge der Rohrleitungen jeweils durch "a", "b", "c", "d", "e", "f" gekennzeichnet sind.

Während die Abwasserbehandlungsanlage der Fig. 1a, b für CMP-Abwässer mit geringen bis mittleren Partikelverunreinigungen ausgelegt ist, ist die Abwasserbehandlungsanlage der Fig. 2a, b, c auch für die Behandlung von CMP-Abwässern mit chemischen Verunreinigungen geeignet. Dies können insbesondere Verunreinigungen mit Arsen und/oder mit Tetramethylammoniumhydroxid sein.

Gleiche Teile sind in den Fig. 1a, b und in den Fig. 2a, b, c mit den gleichen Bezugszeichen versehen. Da der Aufbau der Vorrichtung der Fig. 2a, b, c dem Aufbau der Vorrichtung der Fig. 1a, b stark ähnelt, wird im folgenden nur noch auf die Unterschiede eingegangen; im übrigen wird auf die Erläuterung zu Fig. 1a, b verwiesen.

Über die Eingangsrohrleitung 1 strömt der Abwasserbehandlungsanlage der Fig. 2a, b, c CMP-Abwasser zu, das arsen- und/oder tetramethylammoniumhydroxidhaltig ist. Die gesamte Anlage der Fig. 2a, b, c ist auf einen Abwasserdurchsatz von etwa 10 m³/h ausgelegt. Das die Ultrafiltrationsanlage 12 verlassende, vorgereinigte Abwasser wird über eine Rohrleitung 41, in die eine Pumpe 42 eingefügt ist, der Umkehrosmose- und/oder Nanofiltrationsanlage 40 zugeführt. Das zweistufig gereinigte Abwasser verläßt die Umkehrosmose- und/oder Nanofiltrationsanlage 40 über eine Rohrleitung 14. Das abfiltrierte Konzentrat der Ultrafiltrationsanlage 12, das unter üblichen Betriebsbedingungen in einer Menge von etwa 100 l/h anfällt, gelangt über eine Ausgangsrohrleitung 13 in eine in den Fig. 2a, b, c nicht gezeigte Behandlungsanlage. In dieser an sich bekannten Behandlungsanlage findet wiederum eine Neutralisation und Sedimentation des abfiltrierten Konzentrats statt. Für den Fall, daß im abfiltrierten Konzentrat noch nicht vernachlässigbare Arsenanteile gefunden werden, kann auch in an sich bekannter Weise eine Arsenfällung durchgeführt werden.

In diese Behandlungsanlage gelangt über eine Ausgangsrohrleitung 43 auch das abfiltrierte Konzentrat bzw. die durch Umkehrosmose konzentrierte Lösung aus der Umkehrosmose- und/oder Nanofiltrationsanlage 40, das bzw. die unter üblichen Betriebsbedingungen in einer Menge von etwa 1000 l/h anfällt. Bei der Nanofiltration in der Nanofiltrationsanlage 40 der Fig. 2a, b, c werden im wesentlichen alle Partikel mit einem Durchmesser von mehr als 0,05 µm ausgefiltert.

In dieselbe Behandlungsanlage gelangt über den Pumpensatz 28 und eine Ausgangsrohrleitung 29a gegebenenfalls auch CMP-Abwasser aus dem Speicherbehälter 27.

Weiter ist vorgesehen, mit der Rohrleitung 14 eine Probeentnamepumpe 44 zu verbinden. Die Probeentnahmepumpe 44 entnimmt der Rohrleitung 14 geringe Mengen an zweistufig gereinigtem Abwasser und führt dieses Meßwasser über Ventile 45, Zwischenspeicherbehälter 46 und Rohrleitungen 47, 48 wieder in den Vorlagebehälter 7 zurück. An die Zwischenspeicherbehälter 46 sind Sensoren 49 angeschlossen, die on-line den Gesamtgehalt an organisch gebundenem Kohlenstoff (total organic carbon content TOC) sowie die Partikelzahl messen. Diese Meßwerte werden, ebenso wie der mit dem Meßsensor 16 und dem Steuerungssystemsensor 15 gemessene Leitfähigkeitswert des Abwassers in der Rohrleitung 14, dem Umsetzerstellglied 19 über Signalleitungen 50 zur Auswertung übermittelt.

In die Rohrleitung 47 mündet auch die Rohrleitung 34 von der Pumpe 33 der Abwasserbehandlungsanlage der Fig. 1a, b, so daß bei Bedarf mittels der Sensoren 49 auch das ultrafiltrierte Abwasser in der Ausgangsrohrleitung 17 in der Anlage der Fig. 1a, b auf seinen Gehalt an gesamtem organisch gebundenen Kohlenstoff und Partikeln untersucht werden kann.

Mit der Abwasserbehandlungsanlage der Fig. 2a, b, c läßt sich - über die mit der Anlage der Fig. 1a, b erreichbaren Grenzwerte hinaus - ein Gesamtgehalt an organisch gebundenem Kohlenstoff (TOC) von weniger als 2 mg/l im zweistufig gereinigtem CMP-Abwasser in der Ausgangsrohrleitung 17 der Fig. 2a, b, c erreicht. Von den etwa 10 m³/h einströmenden CMP-Abwässern werden in der Anlage der Fig. 2a, b, c circa 8,9 m³/h wieder über die Ausgangsrohrleitung 17 der Aufbereitungsanlage für deionisiertes Wasser zugeführt und rezykliert, lediglich etwa 1,1 m³/h werden dem Kreislauf entzogen und der Behandlungsanlage zur Neutralisation und Sedimentation zugeführt.

### Bezugszeichenliste

- 1: Eingangsrohrleitung
- 2: Hebeanlage
- 3: Pumpensatz
- 4: Rohrleitung
- 5: Rohrleitung
- 6: Rohrleitung
- 7: Vorlagebehälter
- 8: Füllstandsmeßeinrichtung
- 9: Grenzwertschalter
- 10: Pumpe
- 11: Rohrleitung
- 12: Ultrafiltrationsanlage
- 13: Ausgangsrohrleitung
- 13a: Ausgangsrohrleitung
- 14: Rohrleitung
- 15: Steuerungssystemsensor
- 16: Meßsensor
- 17: Ausgangsrohrleitung
- 18: Ventil
- 19: Umsetzerstellglied
- 20: Steuerleitung
- 21: Ventil
- 22: Rohrleitung
- 23: Steuerleitung
- 24: Steuerleitung
- 25: Ventil
- 26: Rohrleitung
- 27: Speicherbehälter
- 28: Pumpensatz
- 29: Ausgangsrohrleitung
- 29a: Ausgangsrohrleitung
- 30: Steuerleitung
- 31: Ventil
- 32: Ventil
- 33: Pumpe
- 34 35 36 37 38 39: Ausgangsrohrleitung
- 40: Umkehrosmose- und/oder Nanofiltrationsanlage
- 41: Rohrleitung
- 42: Pumpe
- 43: Ausgangsrohrleitung
- 44: Probeentnahmepumpe
- 45: Ventile
- 46: Zwischenspeicherbehälter
- 47: Rohrleitung
- 48: Rohrleitung
- 49: Sensoren
- 50: Signalleitung

## Patentansprüche

1. Verfahren zur Behandlung von Abwasser aus einem chemisch-mechanischen Polierprozeß in der Chipfertigung, wobei das Abwasser abrasiv wirkende Partikel und diese angreifende, chemisch aktive Substanzen enthält,
**dadurch gekennzeichnet,**
**daß** die im Abwasser enthaltenen, abrasiv wirkenden Partikel durch eine Ultrafiltration so schnell aus dem Abwasser entfernt werden, daß die Partikel durch die im Abwasser enthaltenen, chemisch aktiven Substanzen im wesentlichen nicht aufgelöst werden, und
die in der Ultrafiltrationsanlage herausgefilterten Partikel durch Spülen derselben in so kurzen Zeitabständen aus der Ultrafiltrationsanlage entfernt werden, daß die dort zurückgehaltenen Partikeln im wesentlichen nicht durch die im Abwasser enthaltenen, chemisch aktiven Substanzen aufgelöst werden.

2. Verfahren nach Anspruch 1,
**dadurch gekennzeichnet,**
**daß** das Abwasser zusätzlich einer Umkehrosmose unterworfen wird.

3. Verfahren nach einem der Ansprüche 1 oder 2,
**dadurch gekennzeichnet,**
**daß** das Abwasser zusätzlich einer Nanofiltration unterworfen wird.

4. Verfahren nach einem der Ansprüche 1 bis 3,
**dadurch gekennzeichnet,**
**daß** nach der Ultrafiltration ein oder mehrere Parameterwerte des Abwassers gemessen werden und in Abhängigkeit von den gemessenen Parameterwerten das ultrafiltrierte Abwasser zusätzlich einer Umkehrosmose und/oder einer Nanofiltration unterworfen wird.

5. Verfahren nach einem der Ansprüche 1 bis 4,
**dadurch gekennzeichnet,**
**daß** das gereinigte Abwasser anschließend zu deionisiertem Wasser rezykliert wird.

## Claims

1. Method for treating wastewater from a chemical mechanical polishing process in chip fabrication, the wastewater containing particles having an abrasive effect and chemically active substances which attack these,
**characterized in that**
the particles which have an abrasive effect and are present in the wastewater are so rapidly removed from the wastewater by means of ultrafiltration, that the particles are essentially not dissolved by the chemically active substances present in the wastewater, and the particles filtered out in the ultrafiltration facility are removed from the ultrafiltration facility by the latter being flushed at sufficiently short intervals for the particles retained there essentially not to be dissolved by the chemically active substances present in the wastewater.

2. Method according to Claim 1,
**characterized in that**
the wastewater is additionally subjected to a reverse osmosis.

3. Method according to either one of Claims 1 and 2,
**characterized in that**
the wastewater is additionally subjected to a nanofiltration.

4. Method according to any one of Claims 1 to 3,
**characterized in that**
after the ultrafiltration one or more parameter values of the wastewater are measured and, depending on the parameter values measured, the ultrafiltrated wastewater is additionally subjected to a reverse osmosis and/or a nanofiltration.

5. Method according to any one of Claims 1 to 4,
**characterized in that**
the purified wastewater is then recycled to produce deionized water.

## Revendications

1. Procédé de traitement d'eaux usées d'un procédé de polissage chimio-mécanique dans la fabrication des puces, les eaux usées contenant des particules à action abrasive et des substances actives chimiquement qui les attaquent,
**caractérisé,**
**en ce que** l'on élimine si rapidement des eaux usées, les particules contenues dans les eaux usées et à effet abrasif par une ultrafiltration que les particules ne sont sensiblement plus dissoutes par les substances actives chimiquement contenues dans les eaux usées et,
on élimine de l'installation d'ultrafiltration les particules filtrées dans l'installation d'ultrafiltration en les lavant à des intervalles de temps si courts que les particules qui sont retenues ne s'en sont sensiblement pas dissoutes par les substances actives chimiquement contenues dans les eaux usées.

2. Procédé suivant la revendication 1, **caractérisé en ce que** l'on soumet les eaux usées, en outre, à une osmose inverse.

3. Procédé suivant l'une des revendications 1 ou 2, **caractérisé en ce que** l'on soumet les eaux usées en outre, à une nanofiltration.

4. Procédé suivant l'une des revendications 1 à 3, **caractérisé en ce qu'**après l'ultrafiltration, on mesure une ou plusieurs valeurs de paramètre des eaux usées et on soumet, en fonction des valeurs de paramètre mesurées, les eaux usées ultrafiltrées, en outre, à une osmose inverse et/ou à une nanofiltration.

5. Procédé suivant l'une des revendications 1 à 4, **caractérisé en ce qu'**on recycle les eaux usées épurées ensuite à de l'eau déminéralisée.
